# EUROPÄISCHE PATENTSCHRIFT

(11) **EP 3 423 423 B1**
(45) Veröffentlichungstag und Bekanntmachung des Hinweises auf die Patenterteilung: **22.11.2023**
(21) Anmeldenummer: 17701654.0
(22) Anmeldetag: 16.01.2017
(51) Int. Cl.: C04B 35/16, C04B 35/457, C04B 35/462, C04B 35/48, C04B 35/626, H01G 4/12

(54) **VERFAHREN ZUR HERSTELLUNG UND ZUSAMMENSETZUNG EINER DIELEKTRISCHEN KERAMISCHEN ZUSAMMENSETZUNG**
METHOD FOR THE PRODUCTION AND COMPOSITION OF A DIELECTRIC CERAMIC COMPOSITION
PROCÉDÉ DE PRÉPARATION ET COMPOSITION D'UNE COMPOSITION CÉRAMIQUE DIÉLECTRIQUE

(30) Priorität: 04.03.2016 DE 102016103949
(43) Veröffentlichungstag der Anmeldung: 09.01.2019
(73) Patentinhaber: TDK Electronics AG, 81671 München (DE)
(72) Erfinder: DUDESEK, Pavol, 8530 Deutschlandsberg (AT)
(74) Vertreter: Epping - Hermann - Fischer
(86) Internationale Anmeldenummer: PCT/EP2017/050794
(87) Internationale Veröffentlichungsnummer: WO 2017/148606

(56) Entgegenhaltungen:
- EP-A1- 2 371 787
- EP-A2- 0 304 647
- US-A1- 2002 002 108
- GOGOI PALLABI ET AL: "Optical, Dielectric Characterization and Impedance Spectroscopy of Ni-Substituted MgTiO3Thin Films", JOURNAL OF ELECTRONIC MATERIALS, WARRENDALE, PA, US, Bd. 45, Nr. 2, 2. Dezember 2015 (2015-12-02), Seiten 899-909, XP035944841, ISSN: 0361-5235, DOI: 10.1007/S11664-015-4209-3 [gefunden am 2015-12-02]
- CAI HAOCHENG ET AL: "A microwave dielectric material Mg0.5Zn0.5ZrNb2O8", MATERIALS LETTERS, Bd. 144, 8. November 2014 (2014-11-08), Seiten 78-81, XP029200904, ISSN: 0167-577X, DOI: 10.1016/J.MATLET.2015.01.009
- Shaocheng Ji ET AL: "Bulk flow strength of forsterite-enstatite composites as a function of forsterite content", TECTONOPHYSICS., vol. 341, no. 1-4, 1 November 2001 (2001-11-01), pages 69-93, XP055716569, NL ISSN: 0040-1951, DOI: 10.1016/S0040-1951(01)00191-3

## Beschreibung

Die Erfindung betrifft dielektrische keramische Zusammensetzungen mit verbesserten elektrischen und mechanischen Eigenschaften, z. B. für HF-Bauelemente, und Verwendungsmöglichkeiten solcher Zusammensetzungen.

Keramische Dielektrika können als isolierende Materialien in elektrischen Bauelementen, z. B. als Substratmaterialien, Verwendung finden. Für Hochfrequenz-Anwendungen werden häufig Materialien mit niedriger Dielektrizitätskonstante und kleinem Verlustfaktor bzw. hohem Gütefaktor Q, z. B. für den Einsatz in Wellenleitern, Strip-Line-Filtern, dielektrischen Resonatoren, Substrate für integrierte Schaltungen usw., benötigt. Die Gruppe der Materialien, die gute Eigenschaften insbesondere in einem Frequenzbereich zwischen 0,5 GHz und 100 GHz aufweisen, ist allerdings beschränkt.

Es ist möglich, Polymerwerkstoffe als Dielektrika in solchen Bauelementen einzusetzen. Im Vergleich mit Polymerwerkstoffen zeigen keramische Materialien jedoch im Allgemeinen eine längere Langzeitstabilität durch eine verringerte Materialdegradation (z.B. durch UV-Strahlung, Hitze, Kälte), sind unempfindlicher gegenüber Feuchtigkeit, haben eine erhöhte Gasdichtigkeit und ermöglichen deshalb insgesamt Bauelemente mit höherer Zuverlässigkeit.

Allerdings sind die dielektrischen Konstanten keramischer Materialien verglichen mit organischen, auf Polymer-Basis erhöht.

Übliche keramische Materialien sind z. B. Cristobalit (eine Modifikation von Siliziumdioxid), Tritymit (eine weitere Modifikation von Siliziumdioxid SiO₂), Cordierit (ein Magnesium-Aluminium-Silikat), Willemit (ein Silikat der stöchiometrischen Zusammensetzung Zn2[SiO₄]), Mullit (ein Aluminium umfassendes Silikat), Forsterit (ein Silikat mit der stöchiometrischen Zusammensetzung Mg₂SiO₄), Aluminiumnitrid (AlN), Korund (Al₂O₃) und Glas-Keramiken. Nur die Werkstoffe Cristobalit, Tritymit, Cordierit, Willemit und Glas-Keramiken haben eine Dielektrizitätskonstante, die kleiner als 7 ist. Cristobalit und Tritymit sind metastabil und zeigen eine Phasenumwandlung im Bereich zwischen 300 °C und 600 °C. Cordierit ist ein Material mit hohem Verlustfaktor und einem sehr niedrigen thermischen Ausdehnungskoeffizienten (TCE = Thermal Coefficient of Expansion) von 0,5 ppm/K. Niedrige thermische Ausdehnungskoeffizienten sind problematisch, da sie zu hohen thermomechanischen Spannungen bei Temperaturschwankungen führen. Der niedrige thermische Ausdehnungskoeffizient von Willemit schränkt seine Anwendung ebenfalls ein.

Aus der EP 2371787 Al sind dielektrische keramische Zusammensetzungen, z.B. für HF-Anwendungen, bekannt, die auf Ausgangsmaterialien wir SnO₂, TiO₂ und Mg₂SiO₄ beruhen.

Es besteht deshalb der Wunsch nach dielektrischen Materialien mit niedriger Dielektrizitätskonstante, kleinem Verlustfaktor, insbesondere in Frequenzbereichen jenseits von 1 GHz. Ferner soll das Material RoHS konform sein, d. h. der entsprechenden Richtlinie der Beschränkung der Verwendung gefährlicher Stoffe entsprechen. Ferner soll der thermische Ausdehnungskoeffizient hinreichend groß sein.

Insbesondere soll die Dielektrizitätskonstante ≤ 7 sein, der Gütefaktor, z. B. bei 10 GHz, ≥ 16.000 sein und der thermische Ausdehnungskoeffizient ≥ 8 ppm/K sein.

Im Übrigen soll die spezifische Dichte möglichst klein sein, um das Gewicht daraus gefertigter Bauelemente zu verringern. Ferner besteht der Wunsch nach dielektrischen keramischen Zusammensetzungen, die sich aus häufig vorkommenden Ausgangsmaterialien schaffen lassen.

Außerdem soll die Zusammensetzung eine geringe Empfindlichkeit gegenüber Verunreinigungen aufweisen. D.h., dass eine Verunreinigung mit zusätzlichen Stoffen die wesentlichen Eigenschaften der Zusammensetzung höchstens in tolerierbarem Maß ändert.

Entsprechend besteht auch der Wunsch nach keramischen Bauelementen mit verbesserten mechanischen und elektrischen Eigenschaften, die auf entsprechenden Dielektrika basieren.

Der unabhängige Anspruch gibt eine entsprechende keramische Zusammensetzung an. Abhängige Ansprüche geben vorteilhafte Ausgestaltungen und Verwendungen an.

Die keramische Zusammensetzung umfasst einen Hauptbestandteil und einen Rest. Die Zusammensetzung des Rests wird im Wesentlichen durch Verunreinigungen bei der Herstellung bestimmt. Der dominierende Bestandteil der Zusammensetzung ist der Hauptbestandteil und hat das Mengenverhältnis:

Mg_{(1+x) (1-y)} O₍₃₊ₓ₎A₍₁₊ₓ₎ySi_{(1-z)}D_{z}

Dabei ist x eine reelle Zahl ≥ 0,01 und ≤ 0,3. y ist eine reelle Zahl ≥ 0 und ≤ 0,2. z ist eine reelle Zahl zwischen 0 und 1.

Der Hauptbestandteil der keramischen Zusammensetzung umfasst somit zum überwiegenden Teil Mg (Magnesium), O (Sauerstoff), ein weiteres Element A, Si (Silizium) und einen weiteren Rest D. Mögliche und vorteilhafte Elemente für A und für D werden weiter unten angegeben.

In einer einfachen Zusammensetzung ergibt sich die keramische Zusammensetzung somit als ein nicht-stöichometrisches Magnesiumsilikat.

Die Zahl x gibt die relative Menge an MgO an, die als Überschuss in der keramischen Zusammensetzung enthalten ist. Die Zahl y gibt die relative Menge des Elements an, das durch A repräsentiert wird, das Mg ersetzen kann. Die Zahl z gibt die relative Menge des Elements an, das durch das Symbol D repräsentiert wird, das Si ersetzen kann.

Die verbesserten elektrischen und mechanischen Eigenschaften der angegebenen keramischen Zusammensetzung überraschen. Aus Untersuchungen an den keramischen Zusammensetzungen Forsterit (Mg₂SiO₄) und Enstatit (MgSiOs) (z. B. "Effect of Mg/Si Ratio on Microwave Dielectric Characteristics of Fosterite Seramics"; K.X. Song, X.M. Chen, X.C. Fan; J. Am. Ceram. Soc., 90[6] 1808-1811 (2007); "Synthesis and Microwave Dielectric Properties of MgSiOs Ceramics"; M.E. Song, J.S. Kim, M.R. Joung, S. Nahm, Y.S. Kim, J.H. Paik, B.H. Choi; J. Am. Ceram. Soc., 91[8] 2747-2750 (2008)) sind elektrische Eigenschaften dieser Keramiken bekannt. Enstatit und Forsterit können aufgrund ihrer unterschiedlichen stöchiometrischen Zusammensetzung unterschiedliche Kristallstrukturen zugeordnet werden. Die dielektrische Güte von Keramik mit 2 Kristallphasen in Abhängigkeit von der Zusammensetzung kann monoton von einem kleineren Wert zu einem größeren Wert oder durch ein Minimum verlaufen. Dieses Minimum kann sehr flach oder auch sehr deutlich ausgeprägt sein. Die Erklärung dafür sind dielektrische Verluste an Korngrenzen zwischen zwei ungleichen Phasen. Je mehr solcher Korngrenzen vorhanden sind, desto größer ist der Beitrag zu gebildeten Gesamtverlusten. Wenn ein solches Minimum der dielektrischen Güte vorhanden ist, dann liegt es bei einer keramischen Zusammensetzung mit einem Maximum an Korngrenzen. Sowohl Enstatit als auch Forsterit weisen eine relativ hohe dielektrische auf. Eine Zusammensetzung, die weniger Mg als stöchiometrischen Forsterit beinhaltet, hätte deshalb eine wesentlich verschlechterte Güte gegenüber einer stöchiometrischen Fosterit-Keramik. Es wäre deshalb zu erwarten, dass die elektrische Güte einer keramischen Zusammensetzung bei einem 1:1 Verhältnis von Mg und Si (Enstatit) und bei einem 2:1 Verhältnis von Mg und Si (Forsterit) lokale Maxima aufweist. Bei Mischverhältnissen zwischen 1:1 und 2:1 wäre deshalb eine Verschlechterung der elektrischen Eigenschaften zu erwarten. Die elektrische Güte würde zwischen diesen Verhältnissen eine Absenkung erfahren.

Es hat sich nun allerdings herausgestellt, dass - ausgehend vom 1:1 Verhältnis von Enstatit - eine Anreicherung von Mg auf Verhältnisse zwischen 1:1 und 2:1 unerwartet eine Verbesserung der elektrischen Güte bewirkt.

Es ist möglich, dass der Wert für x ≥ 0,02 und ≤ 0,08 ist. Für diesen Wertebereich von x hat die keramische Zusammensetzung eine besonders kleine dielektrische Konstante und gleichzeitig einen hohen elektrischen Gütefaktor Q, z.B. Q*f = 160 THz bis 200 THz (und sogar bis 220 THz sind möglich). Zum Vergleich: Literaturwerte von Enstatit liegen bei etwa Q*f = 120 THz.

Gütewerte Q*f von 160 THz sind dabei sogar bei relativ hohem Grad an Verunreinigungen möglich, was die Robustheit der elektrischen Güte gegen Verunreinigungen zeigt.

Es ist möglich, dass x = 0,17 beträgt. Dann kann die keramische Zusammensetzung eine Dichte von 3,039 g/ccm aufweisen. Die dielektrische Konstante kann 6,63 betragen.

Es ist ferner möglich, dass x den Wert 0,04 hat. Dann kann eine spezifische Dichte von 3,06 g/ccm einerseits und eine dielektrische Konstante von 6,57 andererseits erhalten werden. Für x = 0 kann die spezifische Dicht 3,06 bei einer Dielektrizitätskonstante von 6,2 betragen, wobei der Gütefaktor im Vergleich mit größeren Werten für x verringert ist.

A bildet in Verbindung mit einem Sauerstoffatom ein zweiwertiges Oxid AO. A wird dabei ausgewählt aus Zn (Zink), Ni (Nickel), Co (Kobalt), Mn (Mangan) und einer Mischung aus Zn, Ni, Co, Mn. Das entsprechende zweiwertige Oxid wäre dann jeweils ZnO (Zinkoxid), NiO (Nickeloxid), CoO (Kobaltoxid), MnO.

D bildet zusammen mit O₂ ein vierwertiges Oxid. D wird dabei aus Ti (Titan), Sn (Zinn), Zr (Zirkon) und einer Mischung aus Ti, Sn und Zr ausgewählt. Das entsprechende vierwertige Oxid ist dann jeweils TiO₂, SnO₂, ZrO₂.

Es ist möglich, dass der Rest herstellungsbedingte Verunreinigungen enthält. Ausgangsmaterialien zur Herstellung für die oben genannte keramische Zusammensetzung können durch Mühlen, z. B. Kugelmühlen, Trommelmühlen, Rohrmühlen, Attritormühlen usw. zu Pulver zermahlen werden. Dabei ist es praktisch unvermeidlich, dass Abriebprodukte, z. B. aus Kugeln aus Zirkonoxid, zu den Ausgangsprodukten der keramischen Zusammensetzung hinzukommen und die Zusammensetzung verunreinigen. Umso wichtiger ist die Unempfindlichkeit der elektrischen und mechanischen Eigenschaften der keramischen Zusammensetzung auf solche Verunreinigungen. So sind trotz Verunreinigungen Güten um etwa Q*f = 160 THz leicht erreichbar.

Der Rest der Zusammensetzung kann entsprechende Anteile an Al₂O₃, ZrO₂, TiO₂, Nb₂O₅ oder Ta₂O₅ enthalten.

Der Rest kann zweiwertige Elemente enthalten. Der Rest kann ferner zweiwertige Elemente wie Ca (Kalzium), Sr (Strontium) und/oder Ba (Barium) enthalten. Kalzium, Strontium oder Barium können jeweils mit einem Anteil von 0,3 Mol-% oder weniger bezogen auf die gesamte Zusammensetzung enthalten sein. Es ist möglich, dass die keramische Zusammensetzung zu 95 Mol-% oder mehr aus dem Hauptbestandteil besteht.

Eine mögliche keramische Zusammensetzung hat im Frequenzbereich zwischen 0,5 GHz und 100 GHz eine dielektrische Konstante ≤ 7. Der Qualitätsfaktor Q hat einen Wert von 16000 oder größer bei 10 GHz. Der thermische Ausdehnungskoeffizient ist ≥ 8 ppm/K. Die spezifische Dichte ist ≤ 3,5 g/ccm.

Ein Verfahren zur Herstellung einer keramischen Zusammensetzung umfasst die Schritte:
- Bereitstellen kalzinierter Pulver mit MgO, AO, SiO₂, DO₂,
- Vermengen der Pulver mit einem Bindemittel und Erzeugen eines pressfähigen Granulats,
- Pressen des Granulats,
- Entkohlen des gepressten Granulats,
- Sintern,
wobei
- A ausgewählt ist aus Zn, Ni, Co und einer Mischung aus Zn, Ni, Co,
- D ausgewählt ist aus Ti, Sn, Zr und einer Mischung aus Ti, Sn, Zr.

Dabei ist es möglich, dass die kalzinierten Pulver im Häufigkeitsverhältnis

(1+x) [(MgO)_{1-y}+(AO)_{y}] + (SiO₂)_{(1-z)} + (DO₂)_{z}

mit 0,01 ≤ x ≤ 0,30; 0,00 ≤ y ≤ 0,20; 0,00 ≤ z ≤ 1,00 bereitgestellt werden.

Als Alternative zum Pressen des Granulats kann auch ein Extrusionsverfahren zur Anwendung kommen.

Eine Herstellung der Zusammensetzung ist auch mittels Foliengießen möglich. Diese Art der Herstellung ist bevorzugt, falls Mehrlagensubstrate geschaffen werden sollen.

Eine wie oben angegebene keramische Zusammensetzung kann als Dielektrikum, z. B. in einem Wellenleiter, einem Strip-Line-Filter, einem Mikrowellen-Keramikfilter, einem dielektrischen Resonator, einem Substrat für integrierte Schaltungen oder einem Mehrlagensubstrat für integrierte Schaltungen mit integrierten passiven Schaltungselementen Verwendung finden.

Die entsprechenden elektrischen Bauelemente können zur Verwendung in einem Frequenzbereich zwischen 0,5 GHz und 100 GHz vorgesehen sein.

Eine Veranschaulichung der stöchiometrischen Verhältnisse der keramischen Zusammensetzungen sowie schematische Bauelemente zur beispielhaften Verdeutlichung der Anwendung sind in den Figuren zum besseren Verständnis des Prinzips, auf dem die Zusammensetzung basiert, gezeigt.

Es zeigen:
- Fig. 1:: vorteilhaft Wertebereiche für x und y und beispielhafte Werte für x bei y = 0.
- Fig. 2:: ein elektrisches Bauelement mit einem keramischen Mehrlagensubstrat.
- Fig. 3:: ein Mikrowellen-Keramikfilter.
- Fig. 4:: einen dielektrischen Resonator.

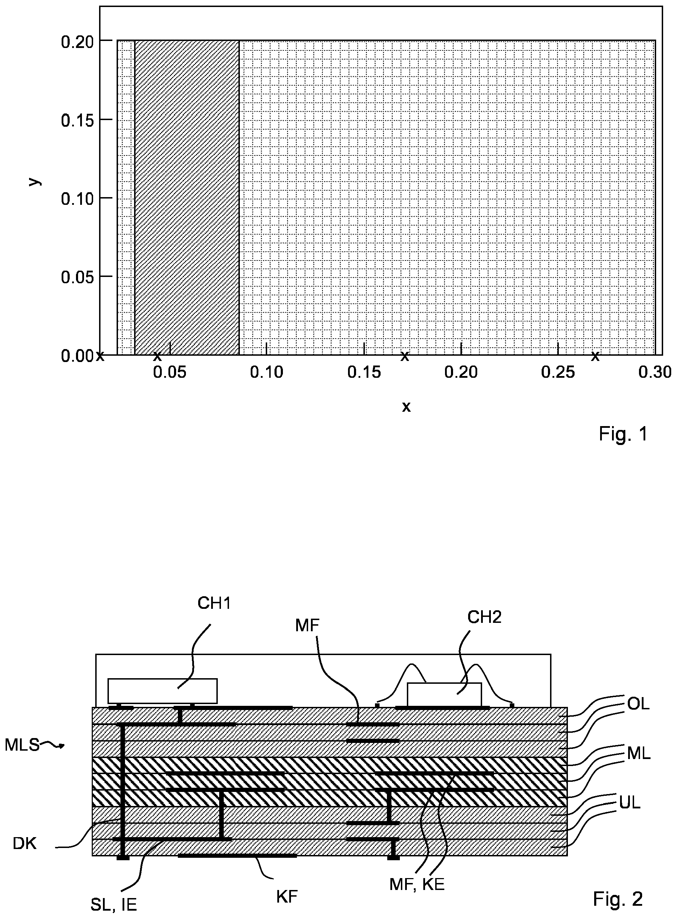

Figur 1 zeigt mögliche und vorteilhafte Werte für x und y. x kann zwischen 0,01 und 0,3 gewählt sein. Vorteilhafterweise liegt x zwischen 0,02 und 0,08. Die elektrischen und mechanischen Eigenschaften der keramischen Zusammensetzung sind relativ stabil gegenüber einer Variation von y, sodass y im angegebenen Intervall relativ frei gewählt werden kann, ohne die Eigenschaften zu verschlechtern. Die markierten Kombinationen für y = 0 und x = 0,27; 0,18; 0,04 und x = 0,00 sind durch Kreuze markiert.

Figur 2 zeigt eine beispielhafte Anwendung der keramischen Zusammensetzung als Material für ein Mehrlagensubstrat mit integrierten Schaltungselementen. Das Mehrlagensubstrat MLS kann verschiedene keramische Zusammensetzungen, z. B. in unteren Lagen UL, mittleren Lagen ML und oberen Lagen OL kombinieren. Signalleiter SL, induktive Elemente IE und kapazitive Elemente KE können über Durchkontaktierungen DK miteinander verschaltet sein. An der Oberseite des Mehrlagensubstrats MLS können Chips CH1, CH2 angeordnet und verschaltet sein. An der Unterseite des Mehrlagensubstrats MLS können Kontaktflächen zur Verschaltung mit einer externen Schaltungsumgebung angeordnet sein.

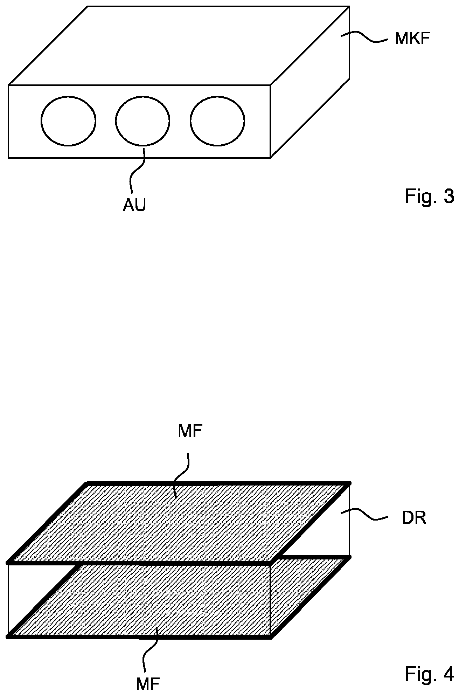

Figur 3 zeigt ein Mikrowellen-Keramikfilter MKF mit einem keramischen Grundkörper aus der keramischen Zusammensetzung. In dem Grundkörper sind zylinderförmige Ausnehmungen AU mit metallisierten Mantelflächen angeordnet. Damit realisieren die Ausnehmungen Resonanzkörper, die durch das Ausbilden einer Resonanz bei einer Resonanzfrequenz HF-Filter darstellen.

Figur 4 zeigt eine weitere mögliche Verwendung der keramischen Zusammensetzung, nämlich als dielektrischer Resonator DR mit einem keramischen Körper zwischen zwei metallisierten Flächen MF.

Die keramische Zusammensetzung und die Verwendung der keramischen Zusammensetzung sind nicht auf die beschriebenen Ausführungsformen und die gezeigten Ausführungsbeispiele beschränkt. Insbesondere aufgrund der Stabilität der elektrischen und mechanischen Eigenschaften der Zusammensetzung können sowohl der Hauptbestandteil als auch der Rest der Zusammensetzung weitere Elemente umfassen. Ebenso ist die Verwendung in weiteren HF-Bauelementen möglich.

### Bezugszeichenliste:

- AU:: Ausnehmung
- CH1, CH2:: Chips
- DK:: Durchkontaktierung
- DR:: dielektrischer Resonator
- IE:: induktives Element
- KE:: kapazitives Element
- KF:: Kontaktfläche
- MF:: metallisierte Fläche
- MKF:: Mikrowellen-Keramikfilter
- ML:: mittlere Lage
- MLS:: Mehrlagensubstrat
- OL:: obere Lage
- SL:: Signalleiter
- UL:: untere Lage
- x:: Werteparameter
- y:: Werteparameter

## Patentansprüche

1. Keramische Zusammensetzung, umfassend
einen Hauptbestandteil mit dem Mengenverhältnis
Mg_{(1+x) (1-y)} O₃₊ₓA_{(1+x) y}Si_{(1-z)}D_{z}
und
einen Rest, wobei
0,01 ≤ x ≤ 0,30;
0,00 ≤ y ≤ 0,20;
0,00 ≤ z ≤ 1,00;
der Rest Verunreinigungen enthält und
- die Zusammensetzung ein nicht-stöichometrisches Magnesiumsilikat ist und
- x die relative Menge an MgO angibt, die als Überschuss in der Zusammensetzung enthalten ist,
- der Rest
· Al₂O₃, ZrO₂, TiO₂, Nb₂O₅ oder Ta₂O₅ und/oder
· zweiwertige Elemente und/oder
· Ca, Sr und/oder Ba, jeweils mit einem Anteil von 0,3 mol % oder weniger bezogen auf die gesamte Zusammensetzung enthält und/oder
· die keramische Zusammensetzung zu 95 mol % oder mehr aus dem Hauptbestandteil besteht,
- A ausgewählt ist aus Zn, Ni, Co, Mn und einer Mischung aus Zn, Ni, Co, Mn,
- D ausgewählt ist aus Ti, Sn, Zr und einer Mischung aus Ti, Sn, Zr.

2. Keramische Zusammensetzung nach dem vorherigen Anspruch, wobei 0,02 ≤ x ≤ 0,08.

3. Keramische Zusammensetzung nach einem der vorherigen Ansprüche, wobei der Rest herstellungsbedingte Verunreinigungen enthält.

4. Keramische Zusammensetzung nach einem der vorherigen Ansprüche, die
- im Frequenzbereich zwischen 0,5 GHz und 100 GHz eine dielektrische Konstante ≤ 7,
- bei 10 GHz einen Qualitätsfaktor Q > 16000 und
- einen thermischen Ausdehnungskoeffizienten ≥ 8 ppm/K und
- eine spezifische Dichte ≤ 3,5 g/cm³
aufweist.

5. Keramische Zusammensetzung nach einem der vorherigen Ansprüche, die mittels Foliengießen hergestellt ist.

6. Verwendung einer keramischen Zusammensetzung nach einem der vorherigen Ansprüche als Dielektrikum in
- einem Wellenleiter,
- einem Strip-Line-Filter,
- einem Mikrowellen-Keramikfilter (MKF)
- einem dielektrischen Resonator (DR),
- einem Substrat für integrierte Schaltungen,
- einem Mehrlagensubstrat (MLS) für integrierter Schaltungen mit integrierten passiven Schaltungselementen (IE, KE).

7. Verwendung nach dem vorherigen Anspruch in einem Frequenzbereich zwischen 0,5 GHz und 100 GHz.

## Claims

1. Ceramic composition comprising
a main component with the quantity ratio
Mg_{(1+x) (1-y)} O₃₊ₓA_{(1+x) y}Si_{(1-z)}D_{z}
and
a remainder, wherein
0.01 ≤ x ≤ 0.30;
0.00 ≤ y ≤ 0.20;
0.00 ≤ z ≤ 1.00,
the remainder contains contaminants and
- the composition is a non-stoichiometric magnesium silicate and
- x indicates the relative amount of MgO present as an excess in the composition,
- the remainder contains
· Al₂O₃, ZrO₂, TiO₂, Nb₂O₅ or Ta₂O₅ and/or
· divalent elements and/or
· Ca, Sr and/or Ba, in each case in a proportion of 0.3 mol% or less, based on the overall composition, and/or
· the ceramic composition consists to an extent of 95 mol% or more of the main component,
- A is selected from Zn, Ni, Co, Mn and a mixture of Zn, Ni, Co, Mn,
- D is selected from Ti, Sn, Zr and a mixture of Ti, Sn, Zr.

2. Ceramic composition according to the preceding claim, wherein 0.02 ≤ x ≤ 0.08.

3. Ceramic composition according to one of the preceding claims, wherein the remainder contains production-related contaminants.

4. Ceramic composition according to one of the preceding claims, which has
- a dielectric constant of ≤ 7 in the frequency range between 0.5 GHz and 100 GHz,
- a quality factor Q of > 16 000 at 10 GHz and
- a thermal coefficient of expansion of ≥ 8 ppm/K and
- a specific density of ≤ 3.5 g/cm³.

5. Ceramic composition according to one of the preceding claims, which is produced by means of film casting.

6. Use of a ceramic composition according to one of the preceding claims as a dielectric in
- a waveguide,
- a strip-line filter,
- a microwave ceramic filter (MKF)
- a dielectric resonator (DR),
- a substrate for integrated circuits,
- a multilayer substrate (MLS) for integrated circuits with integrated passive circuit elements (IE, KE).

7. Use according to the preceding claim in a frequency range between 0.5 GHz and 100 GHz.

## Revendications

1. Composition céramique, comprenant un constituant principal ayant la formule pondérale
Mg_{(1+x) (1-y)} O₃₊ₓA_{(1+x) y}Si_{(1-z)}D_{z}
et
un résidu, dans laquelle
0,01 ≤ x ≤ 0,30 ;
0,00 ≤ y ≤ 0,20 ;
0,00 ≤ z ≤ 1,00 ;
le résidu contenant des impuretés, et
- la composition étant un silicate de magnésium non stœchiométrique et
- x indiquant la quantité relative de MgO qui est contenu en excès dans la composition,
- le résidu a la constitution suivante :
· Al₂O₃, ZrO₂, TiO₂, Nb₂O₅ ou Ta₂O₅ et/ou
· des éléments divalents et/ou
· Ca, Sr et/ou Ba, chacun selon une proportion de 0,3 % en moles ou moins par rapport à la composition dans sa totalité et/ou
· la composition céramique étant constituée du constituant principal à raison de 95 % en moles ou plus,
- A est choisi parmi Zn, Ni, Co, Mn et un mélange de Zn, Ni, Co, Mn,
- D est choisi parmi Ti, Sn, Zr et un mélange de Ti, Sn, Zr.

2. Composition céramique selon la revendication précédente, dans laquelle 0,02 ≤ x ≤ 0,08.

3. Composition céramique selon l'une des revendications précédentes, dans laquelle le résidu contient des impuretés dues au procédé de fabrication.

4. Composition céramique selon l'une des revendications précédentes, qui présente
- dans la plage de fréquences entre 0,5 GHz et 100 GHz une constante diélectrique ≤ 7,
- à 10 GHz, un facteur de qualité Q > 16 000 et
- un coefficient de dilatation thermique ≥ 8 ppm/K et
- une masse volumique ≤ 3,5 g/cm³.

5. Composition céramique selon l'une des revendications précédentes, qui est fabriquée par coulée en feuille.

6. Utilisation d'une composition céramique selon l'une des revendications précédentes comme diélectrique dans
- un guide d'ondes,
- un filtre pour ligne ruban,
- un filtre céramique microondes (MKF)
- un résonateur diélectrique (DR),
- un substrat pour circuits intégrés,
- un substrat multicouche (MLS) pour circuits intégrés comportant des éléments de circuits passifs intégrés (EI, EC).

7. Utilisation selon la revendication précédente dans une plage de fréquences entre 0,5 GHz et 100 GHz.
